# EUROPEAN PATENT APPLICATION

(11) **EP 1 835 379 A2**
(43) Date of publication of application: **19.09.2007**
(21) Application number: 07005484.6
(22) Date of filing: 16.03.2007
(51) Int. Cl.: G06F 1/30, G06F 11/20

(54) **UPS methods, systems and computer program products providing adaptive availability**

(30) Priority: 17.03.2006 US 378137
(71) Applicant: Eaton Power Quality Corporation, Cleveland, OH 44114-2584 (US)
(72) Inventor: Johnson, Robert W. Jr., Raleigh NC 27615 (US); Jonsson, Rune L., Raleigh NC 27614 (US); Ramakrishnan, Sriram, Wake Forest NC 27587 (US)
(74) Representative: Klang, Alexander H.

(57) **Abstract**

An uninterruptible power supply (UPS) system includes a plurality of UPSs configured to be output paralleled. Availability information is communicated from the UPSs, and an aggregate availability of the UPSs is determined responsive to the communicated availability information. Parallel provision of power from the UPSs may be selectively enabled responsive to the determined aggregate availability. The aggregate availability information may also be reported to a user. The aggregate availability may be, for example, a redundancy level and/or a percentage availability provided by the UPSs. The invention may be embodied as methods, apparatus and computer program products.

## Description

### BACKGROUND OF THE INVENTION

The present invention relates to power supply apparatus and methods and, more particularly, to uninterruptible power supply (UPS) apparatus and methods.

A variety of different techniques have been used to improve reliability and/or capacity of uninterruptible power supply systems. The techniques include standby redundant, serial redundant, and parallel redundant approaches. A typical standby redundant UPS configuration includes one or more UPS units operating on a stand-by basis, with no load or only a partial load, which can immediately back up a faulty UPS unit by a transfer of the load. A typical serial redundant arrangement involves first and second UPSs connected in a serial fashion wherein, in a first mode of operation, the first UPS is bypassed while the second UPS is serving the load and, in a second mode of operation, the second UPS is bypassed while the first UPS serves the load, such that the first and second UPSs may serve as standby backups for one another.

In a typical parallel redundant arrangement, multiple uninterruptible power supplies UPSs are coupled in parallel to a load to provide redundancy and/or increased capacity. Parallel redundant arrangements of AC power supplies (e.g., UPSs) are described, for example, in United States Patent No. 5,745,357 to Tassitino, Jr. et al., United States Patent No. 6,549,440 to Tassitino, Jr. et al., United States Patent No. 6,803,679 to Luo et al., United States Patent No. 6,118,680 to Wallace et al., United States Patent No. 4,104,539 to Hase, United States Patent Publication No. 2005/0162792 to Wang et al., and United States Patent Publication No. 2005/0073783 to Luo et al. A conventional modular parallel redundant UPS system is described in "HP UPS R12000 XR Technology" published by Hewlett-Packard (2005).

### SUMMARY OF THE INVENTION

Some embodiments of the present invention provide methods of operating an uninterruptible power supply (UPS) system including a plurality of UPSs configured to be output paralleled. Availability information is communicated from the UPSs, and an aggregate availability of the UPSs is determined responsive to the communicated availability information. Parallel provision of power from the UPSs may be selectively enabled responsive to the determined aggregate availability. The aggregate availability may also be reported to a user. The aggregate availability may be, for example, a redundancy level, a percentage availability and/or other figure of merit.

In some embodiments, selectively enabling parallel provision of power from the UPSs responsive to the determined aggregate availability includes controlling a number of the UPSs providing power responsive to a comparison of the determined aggregate availability to a target availability. For example, a number of UPSs providing power may be reduced responsive to the determined aggregate availability exceeding the target availability. According to further aspects, the target availability may be determined responsive to a predicted load and/or power input condition.

In some embodiments, determining an aggregate availability of the UPSs responsive to the communicated availability information includes determining the aggregate availability at one or more of the UPSs. In some embodiments, communicating availability information from the UPSs includes communicating the availability information to a controller external to the UPSs, determining an aggregate availability of the UPSs responsive to the communicated availability information includes determining the aggregate availability at the controller and selectively enabling parallel provision of power from the UPSs responsive to the determined aggregate availability includes operating the controller responsive to the determined aggregate availability to selectively enable parallel provision of power from the UPSs. In still further embodiments, communicating availability information from the UPSs includes communicating the availability information among the UPSs, and selectively enabling parallel provision of power from the UPSs responsive to the determined aggregate availability includes controlling the UPSs from one or more of the UPSs.

According to additional aspects, the plurality of UPSs includes a first plurality of UPSs configured to be coupled to a load having redundant first and second power supplies, wherein the first plurality of UPSs is configured to be coupled to the first power supply. A second plurality of UPS s may serve the second power supply. Availability information may be communicated from the second plurality of UPSs, and selectively enabling parallel provision of power from the UPSs responsive to the determined aggregate availability includes selectively enabling parallel provision of power from the first plurality of UPSs responsive to the determined aggregate availability and the availability information communicated from the second plurality of UPSs.

Further embodiments of the present invention provide an uninterruptible power supply (UPS) system including a plurality of UPSs configured to be output paralleled and to communicate availability information therefrom. The system further includes a controller configured to determine an aggregate availability of the UPSs responsive to the communicated availability information. The controller may be further configured to selectively enable parallel provision of power from the UPSs responsive to the determined aggregate availability.

Still further embodiments of the present invention provide computer program products for managing availability information for an uninterruptible power supply (UPS) system including a plurality of UPSs configured to be output paralleled and to communicate availability information therefrom. According to some embodiments, a computer program product includes computer program code embodied in a storage medium, the computer program code including program code configured to determine an aggregate availability of the UPSs responsive to the communicated availability information. The computer program code may further include program code configured to selectively enable parallel provision of power from the UPSs responsive to the determined aggregate availability.

### BRIEF DESCRIPTION OF THE DRAWINGS

FIG. 1 illustrates a UPS system and operations thereof according to some embodiments of the present invention.
FIGs. 2 and 3 illustrates exemplary operations of a UPS system according further embodiments of the present invention.
FIG. 4 illustrates a UPS system and operations thereof according to additional embodiments of the present invention.
FIG. 5 illustrates exemplary operations of a UPS system according further embodiments of the present invention.
FIG. 6 illustrates a UPS system and operations thereof according to still further embodiments of the present invention.
FIG. 7 illustrates exemplary operations of a UPS system according to additional embodiments of the present invention.

### DETAILED DESCRIPTION

Specific exemplary embodiments of the invention now will be described with reference to the accompanying drawings. This invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the particular exemplary embodiments illustrated in the accompanying drawings is not intended to be limiting of the invention. In the drawings, like numbers refer to like elements.

As used herein, the singular forms "a", "an" and "the" are intended to include the plural forms as well, unless expressly stated otherwise. It will be further understood that the terms "comprises," "includes," "comprising" and/or "including," when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include wirelessly connected or coupled. As used herein, the term "and/or" includes any and all combinations of one or more of the associated listed items.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Embodiments of the present invention described herein relate to UPS systems and method of operating the same. It will be understood that such UPS systems include, but are not limited to, systems that supply AC and/or DC power to loads. The loads may include, but are not limited to, information technology (IT) equipment, such as computers (e.g., servers), data storage devices (e.g., disk drives), and network devices (e.g., routers and hubs), as well as other types of loads for which dependable power supply may be desired, such as telecommunications equipment, medical equipment, broadcast equipment, and the like.

Embodiments of the present invention herein also generally relate to UPS systems and methods involving UPSs that are connected in parallel to provide, for example, capacity and/or redundancy. It will be appreciated that such UPSs may be individual UPSs connected by external connections, as well as UPS modules or similar modular apparatus connected by external connections and/or by internal connections (e.g., backplane or bus bars) in a rack or similar structure. Such UPSs and UPS modules may take various forms, such as on-line, standby and line-interactive configurations.

Some embodiments of the present invention arise from a realization that, when UPSs are paralleled for redundancy and/or capacity, for reasons of efficiency and other reasons, it may be desirable for the system to operate at an aggregate (system) level of availability, such as a redundancy level (e.g., n+1, n+2, etc.) or a percentage availability, that is less than the maximum level of availability that could be provided by the paralleled UPSs. According to some embodiments of the present invention, paralleled UPSs may be configured to communicate availability information, which may take the form of a current loading of the UPS, a failure status of the UPS, a current battery capacity of the UPS and/or other information that reflects the availability of the UPS to provide power to a load. This availability information may be used to determine an aggregate measure of availability, such as an aggregate redundancy level or percentage availability, and the determined aggregate availability used to selectively enable the UPSs based on a comparison of the aggregate availability to a target availability. For example, if the determined availability exceeds the target availability, one or more UPSs may be disabled to provide, for example, improved efficiency.

According to further aspects, the target availability may be dynamically determined based on system information. For example, target availability may be determined based on current and/or expected load conditions and/or on current and/or expected input power conditions. For example, target availability may be increased if an instability in input power is detected and/or if it is anticipated that the load will increase at some future time. In some embodiments, target availability for respective groups of UPSs that serve redundant power supplies of a load may determined responsive to availability information, e.g., load information, communicated between the groups.

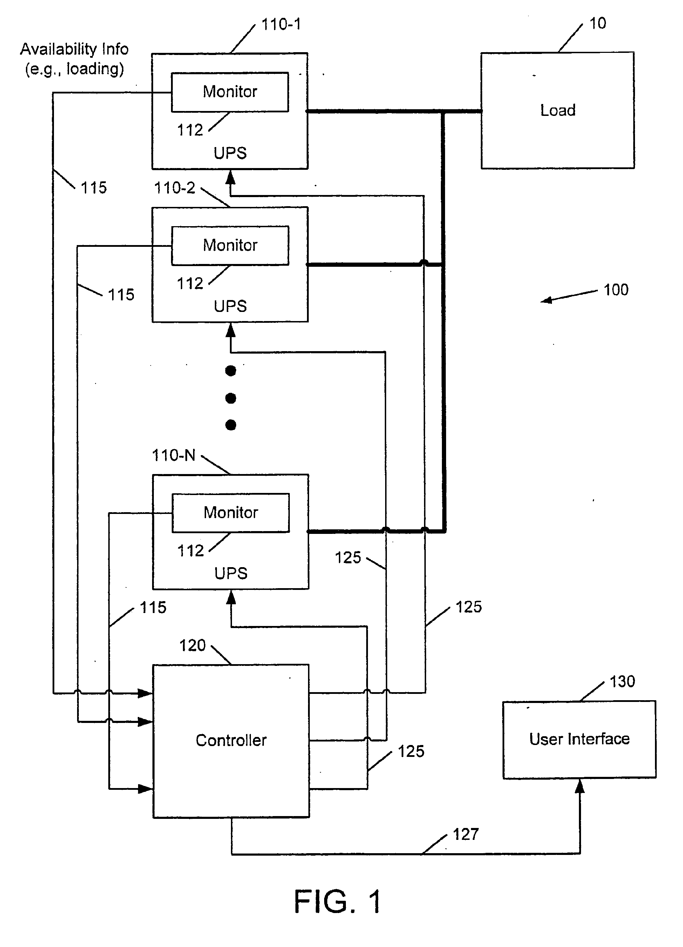

FIG. 1 illustrates a UPS system 100 according to some embodiments of the present invention. The system 100 includes a plurality of UPSs 110-1, 110-2, ... , 110-N that are configured to be output paralleled to provide power to a load 10. Each of the UPSs 110-1, 110-2, ... , 110-N includes a monitor circuit 112, for example, a control circuit that controls power conversion and other operations of the UPSs 110-1, 110-2, ... , 110-N, which communicates availability information 115. The availability information may include, for example, a current loading of the UPS, an operational status (e.g., "operational" or "offline"), a battery capacity of the UPS and/or other information indicative of the capacity of the UPS to provide power to the load 10.

The system 100 further includes an availability controller 120 that is configured to receive the availability information 115. The controller 120 is operative to determine an aggregate availability of the UPSs 110-1, 110-2, ... , 110-N from the availability information 115 and to selectively enable the UPSs 110-1, 110-2, ..., 110-N based on the determined aggregate availability, e.g., by asserting control signals 125. The determined aggregate availability may be, for example, a level of redundancy, a percentage availability, or some other figure of merit that indicates availability of the UPSs 110-1, 110-2, ... , 110-N as a group. As shown, the availability controller 120 may be further configured to provide a report 127 (e.g., a status report and/or alarm) of the determined aggregate availability to a user via a user interface 130, e.g., a computer terminal or similar user interface device.

The availability controller 120 may be configured, for example, to compare the determined aggregate availability with a target availability. As discussed in greater detail below, the comparison may be a numerical comparison, a rule-based comparison and/or some other type of comparison. The target availability may be, for example, a predetermined level or other measure of availability. Such a level or other measure of availability may also be dynamically determined based on system state information.

For example, the UPSs 110-1, 110-2, ... , 110-N may be on-line UPSs fed by an AC source, such as a utility source. While the UPSs 110-1, 110-2, ... , 110-N are operating off this AC source, the controller 120 may detect signal characteristics or other information that indicates that a likelihood of failure of the AC source may be increased. In response to such indications of instability, the controller 120 may increase the target availability to ensure, for example, that an adequate battery power margin is available should the AC power source fail. In some embodiments, for example, the controller 120 may receive information relating to scheduled changes in the load 10, e.g., stepwise increases related to certain schedule functions of the load 10. In response to such information, the controller 120 may raise the target level of availability in anticipation of the load increase.

The UPSs 110-1, 110-2, ... , 110-N and controller 120 may be implemented in a number of different ways in various embodiments of the present invention. For example, in some embodiments, the controller 120 may include a control circuit external to the UPSs 110-1 , 110-2, ... , 110-N, which communicates with the UPSs 110-1, 110-2, ... , 110-N via signal lines, e.g., control wiring and/or digital signal transmission medium, such as a data communications link. In other embodiments, functions of the controller 120 may be imbedded within one or more the UPSs 110-1, 110-2, ... , 110-N. For example, the UPSs 110-1, 110-2, ... , 110-N may be devices that are configured in a master/slave configuration in which one of the UPSs 110-1, 110-2, ... , 110-N acts as the controller 120, or in a peer-to-peer configuration in which functions of the controller 120 are distributed among the UPSs 110-1, 110-2, .. 110-N. It will be understood that, in general, the controller 120 may be implemented using any of number of different types of circuitry, including analog circuitry, digital circuitry (e.g., a microprocessor, microcontroller or digital signal processor) and combinations thereof.

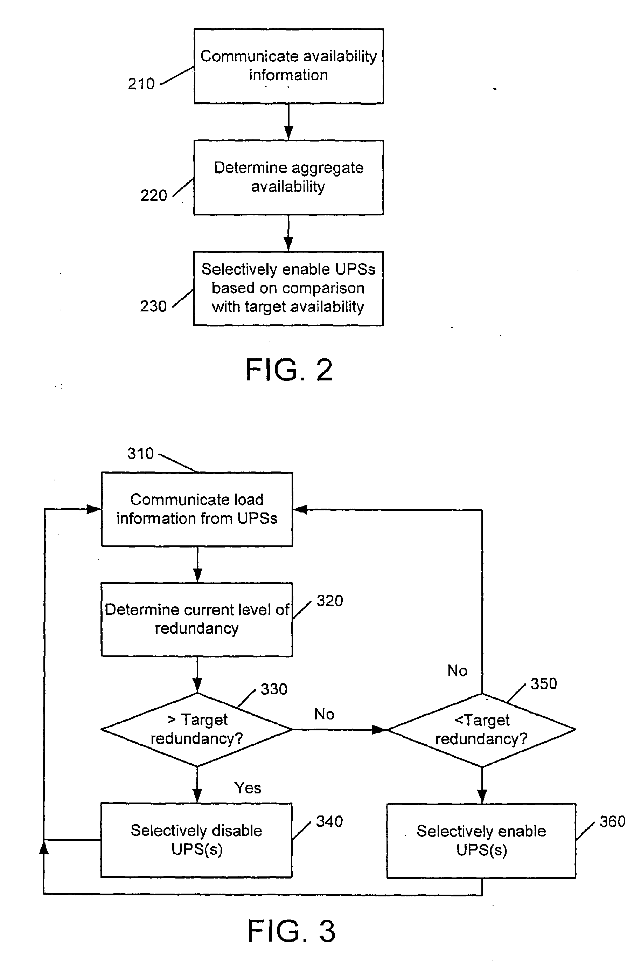

FIG. 2 illustrates exemplary operations of a UPS system according to further embodiments of the present invention. UPSs configured for output paralleling, such as the UPSs 110-1, 110-2, ... , 110-N of FIG. 1, communicate availability information (block 210). As noted above, the communications may be to an external controller and/or among the UPSs, and the availability information communicated by a UPS may include any of a number of different types of information relating to availability of the UPS. Responsive to the communicated availability information, an aggregate availability is determined (block 220). The aggregate availability may be, for example, a redundancy level, percentage availability and/or other figure of merit. Based on a comparison of the determined aggregate availability to a target availability, the UPSs are selectively enabled (block 230). For example, the number of UPSs that are enabled or disabled for power provision may be increased or decreased based on the comparison.

FIG. 3 illustrates exemplary operations according to further embodiments of the present invention. UPSs configured for output paralleling, such as the UPSs 110-1, 110-2, ... , 110-N of FIG. 1, communicate load information to an external controller and/or among one another (block 310). Responsive to this information, a current level of redundancy is determined (block 320). If the determined current redundancy level is greater than a target redundancy level (block 330), one or more of the UPSs may be selectively disabled to reduce the level of redundancy currently offered by the system (block 340). If the determined redundancy level is less than the target redundancy level (block 350), one or more of the UPSs may be selectively enabled to increase the level of redundancy (block 360). If the determined redundancy level meets the redundancy target, the current configuration may be maintained. Monitoring and determination of aggregate redundancy can be repeatedly performed to dynamically adapt to changing conditions.

It will be appreciated that, in some embodiments, "target availability" may include a single numeric value or a range of numeric values. In some embodiments, target availability may refer to a set of availability indicators, and comparison of the determined availability with the target availability may include comparing a set of current availability indicators with a set of target availability indicators. The comparison may include, for example, determination of an index generated by a weighted combination of such plural indicators and/or comparison of the indicators may include applying a rule-based or fuzzy logic process.

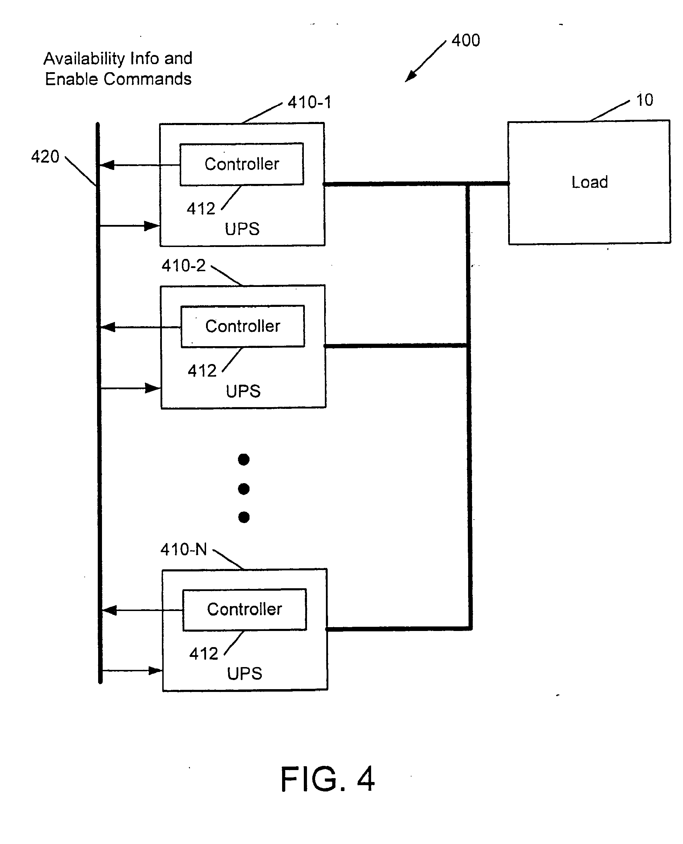

As noted above, adaptive availability control in some embodiments of the present invention may be implemented using master/slave and/or peer-to-peer operations among a plurality of UPSs. Referring to FIG. 4, a UPS system 400 according to further embodiments of the present invention includes a plurality of UPSs 410-1, 410-2, ... , 410-N that are configured to be output paralleled to provide power to a load 10. Each of the UPSs 410-1, 410-2, ... , 410-N includes a controller 412 that controls operations of the UPS. The controllers 412 are configured to communicate availability information among themselves. For example, as shown in FIG. 4, the controllers 412 may be coupled to a communications bus 420 that provides for communications among the UPSs 410-1, 410-2, ... , 410-N. It will be appreciated that communications among the UPSs 410-1, 410-2, ... , 410-N may be conducted in other ways, e.g., by dedicated signaling links between the UPSs.

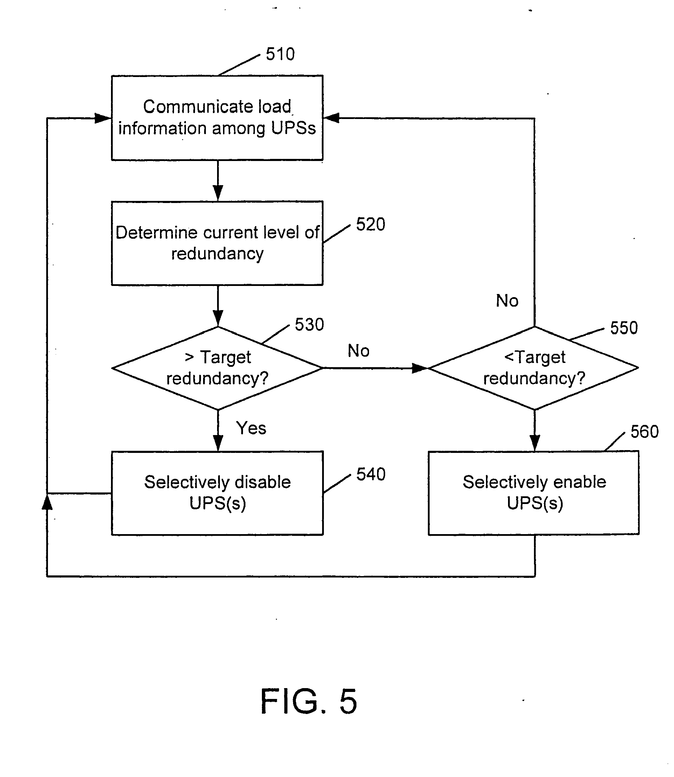

Referring to FIG. 5 in conjunction with FIG. 4, the controllers 412 may be configured to communicate load and other availability information among themselves (block 510). Responsive to the communicated availability information, one or more of the controllers 412 may be configured to determine an aggregate level of redundancy for the UPSs 410-1, 410-2, ... , 410-N (block 520). If the determined redundancy level is greater than a target redundancy level (block 530), one or more of the controllers 412 may selectively disable one or more of the UPSs, e.g., autonomously or by communication over the communications bus 420 (block 540). If the determined redundancy level is less than a target redundancy level (block 550), one or more of the controllers 412 may selectively enable one or more of the UPSs (block 560). If the determined redundancy level meets the redundancy target, the current configuration may be maintained. Monitoring and determination of aggregate redundancy can be repeatedly performed to dynamically adapt the system to changing conditions.

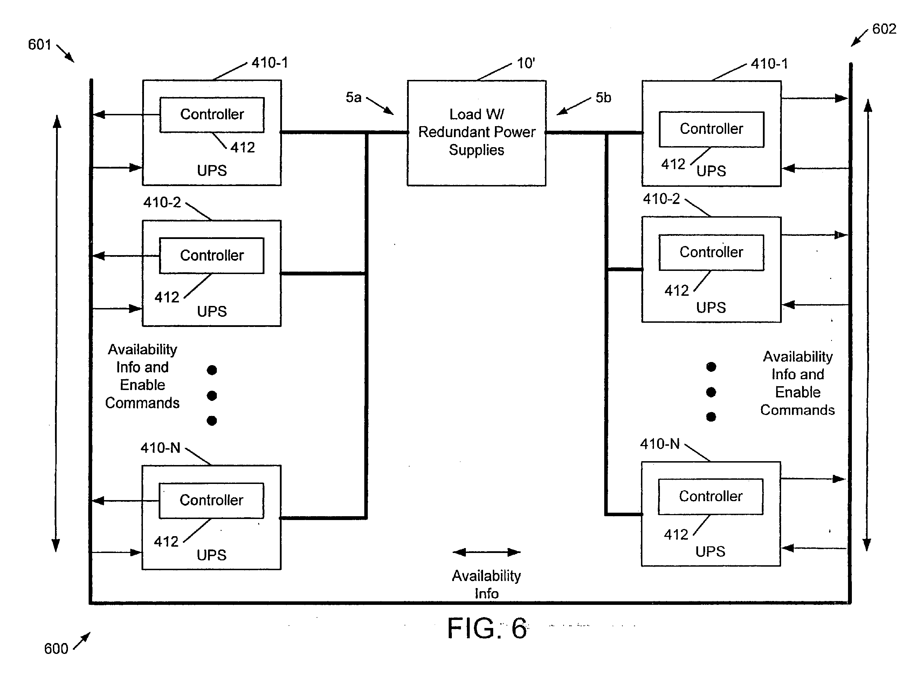

According to further aspects of the present invention, availability information may be shared among groups of UPSs that serve a load with redundant power supplies, and the shared information may be used to adaptively control availability of the groups along the lines described above. Referring to FIG. 6, a UPS system 600 may include first and second groups 601, 602 of UPSs 410-1, 410-2, ... , 410-N. Within a given group 601, 602, the UPSs 410-1, 410-2, ... , 410-N (with controllers 412) are configured to be output paralleled to a load 10' that includes redundant power supplies having respective power inputs 5a, 5b. For example, in some information technology (IT) applications, the load 10' may comprise a plurality of server computer modules in a rack that are provided with DC power from redundant DC power supplies, which may be fed from respective first and second groups of paralleled UPSs as shown in FIG. 6.

According to some embodiments of the present invention, aggregate availability information may be communicated between the groups 601, 602 and used to determine appropriate target availabilities for the respective groups. For example, in order to determine an appropriate target availability for the first group 601, it may be desirable to have knowledge of the potential effect on the load of the first group 601 should the second group fail. In particular, determination of the target availability for the first group 601 may involve taking into account the current loading of the second group 602, so that, for example, a target availability may be chosen that will reduce the likelihood of, for example, overload of one of the UPSs of the first group 601 and/or other undesirable events, such as tripping of a circuit breaker associated with the first group 601 due to a sudden increase in load. Such information may also be used to generate alarms or other information that may be conveyed to an operator or other user. In addition to such operations, the load 10' may also be capable of communicating to the first group 601 and/or the second group 602 information, such as a status of its internal power supply, that may be used in determining target availabilities used by the groups 601, 602.

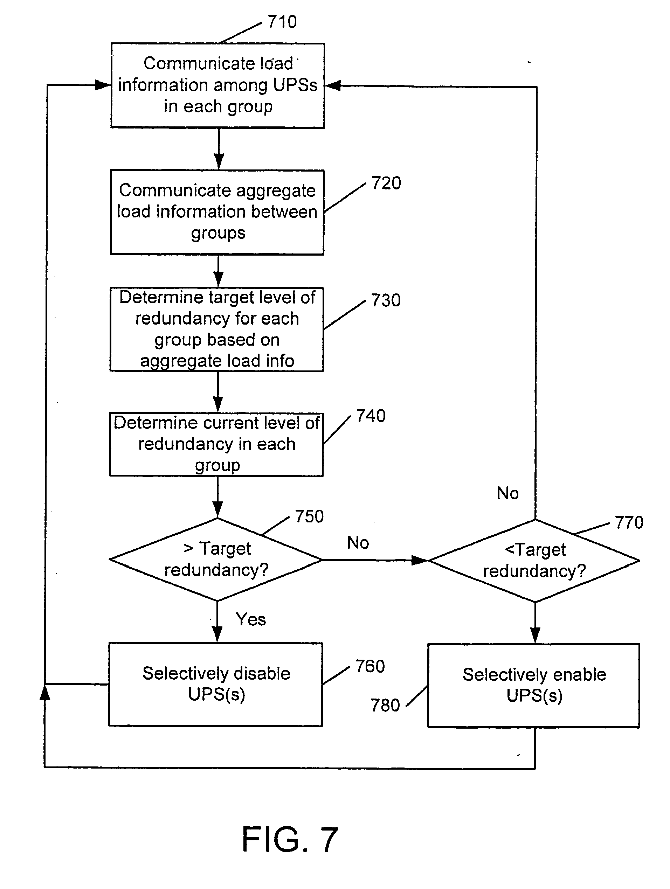

Referring to FIG. 7 in conjunction with FIG. 6, load information may be communicated among the UPSs 410-1, 410-2, ... , 410-N of each of the groups 601, 602 (e.g., among the controllers 412) (block 710), and aggregate availability information determined therefrom may be exchanged between the groups (block 720). Responsive to the exchanged information, each group may determine an appropriate target level of redundancy (block 730). In some embodiments, as noted above, the determination of target redundancy may also involve taking account status and other information from the load 10' that may impact the desired availability. Each group may determine its own current level of redundancy (block 740), e.g., using the previously communicated availability information (see block 710). Within each group, if the determined current redundancy level of the group is greater than the target redundancy level for the group (block 750), one or more of the UPSs in the group may be selectively disabled (block 760). If the current level of redundancy of the group is greater than the target level (block 770), one or more of the UPSs in the group may be enabled (block 780). If the determined redundancy level meets the redundancy target, the current configuration may be maintained. Monitoring and determination of aggregate redundancy can be repeatedly performed to dynamically adapt the system to changing conditions.

The present invention may be embodied as methods, systems, and computer program products. Accordingly, the present invention may be embodied in hardware, software and combinations thereof. Furthermore, the present invention may take the form of a computer program product on a computer-usable storage medium having computer-usable program code embodied in the medium. Applicable storage media include, but are not limited to, hard disks, CD-ROMs, optical storage devices and magnetic storage devices. Computer program code for carrying out operations of the present invention may be written in an object oriented programming language such as Java®, Smalltalk or C++. However, the computer program code for carrying out operations of the present invention may also be written in conventional procedural programming languages, such as the "C" programming language and/or a lower level assembler language.

The present invention has been described in part above with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The flowchart and schematic diagrams of herein illustrate the architecture, functionality, and operations of some embodiments of the present invention. In this regard, each block may represent a module, segment, or portion of code, which includes one or more executable instructions for implementing the specified logical function(s). It should also be noted that in other implementations, the function(s) noted in the blocks may occur out of the order noted in the figures. For example, two blocks shown in succession may, in fact, be executed substantially concurrently or the blocks may sometimes be executed in the reverse order, depending on the functionality involved.

In the drawings and specification, there have been disclosed exemplary embodiments of the invention. Although specific terms are employed, they are used in a generic and descriptive sense only and not for purposes of limitation, the scope of the invention being defined by the following claims.

## Claims

1. A method of operating an uninterruptible power supply (UPS) system comprising a plurality of UPSs (110-1 - 110-N) configured to be output paralleled, the method comprising:
communicating (210) availability information from the UPSs;
determining (220) an aggregate availability of the UPSs responsive to the communicated availability information; and
selectively enabling (230) parallel provision of power from the UPSs responsive to the determined aggregate availability.

2. The method of Claim 1, wherein selectively enabling parallel provision of power from the UPSs responsive to the determined aggregate availability comprises controlling a number of the UPSs providing power responsive to a comparison of the determined aggregate availability to a target availability.

3. The method of Claim 2, wherein controlling a number of the UPSs providing power responsive to a comparison of the determined aggregate availability to a target availability comprises reducing the number of UPSs providing power responsive to the determined aggregate availability exceeding the target availability.

4. The method of Claim 2, further comprising dynamically determining the target availability.

5. The method of Claim 2, wherein controlling a number of the UPSs providing power responsive to a comparison of the determined aggregate availability to a target availability is preceded by determining the target availability responsive to a load condition and/or power input condition.

6. The method of Claim l, wherein determining an aggregate availability of the UPSs responsive to the communicated availability information comprises determining the aggregate availability at one or more of the UPSs.

7. The method of Claim 1:
wherein communicating availability information from the UPSs comprises communicating the availability information to a controller external to the UPSs;
wherein determining an aggregate availability of the UPSs responsive to the communicated availability information comprises determining the aggregate availability at the controller; and
wherein selectively enabling parallel provision of power from the UPSs responsive to the determined aggregate availability comprises operating the controller responsive to the determined aggregate availability to selectively enable parallel provision of power from the UPSs.

8. The method of Claim 1, wherein communicating availability information from the UPSs comprises communicating the availability information among the UPSs, and wherein selectively enabling parallel provision of power from the UPSs responsive to the determined aggregate availability comprises controlling the UPSs from one or more of the UPSs.

9. The method of Claim 1, wherein the plurality of UPSs comprises a first plurality of UPSs configured to be coupled to a load having redundant first and second power supplies, wherein the first plurality of UPSs is configured to be coupled to the first power supply, and wherein a second plurality of UPS s serves the second power supply, wherein the method further comprises communicating availability information from the second plurality of UPSs, and wherein selectively enabling parallel provision of power from the UPSs responsive to the determined aggregate availability comprises selectively enabling parallel provision of power from the first plurality of UPSs responsive to the determined aggregate availability and the availability information communicated from the second plurality of UPSs.

10. The method of Claim 1, wherein determining an aggregate availability of the UPSs responsive to the communicated availability information comprises determining a redundancy level and/or a percentage availability provided by the UPSs.

11. The method of Claim 1, further comprising reporting the aggregate availability to a user.

12. An uninterruptible power supply (UPS) system comprising:
a plurality of UPSs (110-1-110-N) configured to be output paralleled and to communicate availability information therefrom; and
a controller (120) configured to determine an aggregate availability of the UPSs responsive to the communicated availability information and to selectively enable parallel provision of power from the UPSs responsive to the determined aggregate availability.

13. The system of Claim 12, wherein the controller is configured to control a number of the UPSs providing power responsive to a comparison of the determined aggregate availability to a target availability.

14. The system of Claim 12, wherein the controller is configured to reduce the number of UPSs providing power responsive to the determined aggregate availability exceeding the target availability.

15. The system of Claim 12, wherein the controller is configured to dynamically determine the target availability.

16. The system of Claim 12, wherein controller is configured to determine the target availability responsive to a load condition and/or power input condition.

17. The system of Claim 12, wherein the controller is included in one or more of the UPSs.

18. The system of Claim 12, wherein the controller is external to the UPSs.

19. The system of Claim 12, wherein the plurality of UPSs comprises a first plurality of UPSs configured to be coupled to a load having redundant first and second power supplies, wherein the first plurality of UPSs is configured to be coupled to the first power supply, and wherein a second plurality of UPS s serves the second power supply, wherein the controller is configured to receive availability information from the second plurality of UPSs and to selectively enable parallel provision of power from the first plurality of UPSs responsive to the determined aggregate availability and the availability information communicated from the second plurality of UPSs.

20. The system of Claim 12, wherein the aggregate availability comprises a redundancy level and/or a percentage availability.

21. The system of Claim 12, wherein the controller is further configured to report the determined aggregate availability to a user.

22. A computer program product for managing availability information for an uninterruptible power supply (UPS) system including a plurality of UPSs (110-1 - 110-N) configured to be output paralleled and to communicate availability information therefrom, the computer program product comprising computer program code embodied in a storage medium, the computer program code comprising program code configured to determine an aggregate availability of the UPSs responsive to the communicated availability information and to selectively enable parallel provision of power from the UPSs responsive to the determined aggregate availability.

23. The computer program product of Claim 22, wherein the program code program code configured to determine an aggregate availability of the UPSs responsive to the communicated availability information and to selectively enable parallel provision of power from the UPSs responsive to the determined aggregate availability comprises program code configured to control a number of the UPSs providing power responsive to a comparison of the determined aggregate availability to a target availability.

24. The computer program product of Claim 22, wherein the computer program code further comprises program code configured to dynamically determine the target availability.
